# EUROPEAN PATENT APPLICATION

(11) **EP 1 022 790 A2**
(43) Date of publication of application: **26.07.2000**
(21) Application number: 00101445.5
(22) Date of filing: 25.01.2000
(51) Int. Cl.: H01M 2/16

(54) **Alkaline storage battery and manufacturing method of the same**

(30) Priority: 25.01.1999 JP 1613899
(71) Applicant: SANYO ELECTRIC CO. LTD, Moriguchi-shi, Osaka-fu (JP)
(72) Inventor: Nagae, Teruhito, Sanyo Electric Co., Ltd., Moriguchi-shi, Osaka-fu (JP); Takee, Masao, Sanyo Electric Co., Ltd., Moriguchi-shi, Osaka-fu (JP)
(74) Representative: Blumbach, Kramer & Partner GbR

(57) **Abstract**

An alkaline storage battery including a separator of polyolefin resin fibers interposed between positive and negative electrodes thereof, wherein the separator of polyolefin resin fibers is composed of short micro-fibers and long micro-fibers uniformly entangled with each other.

## Description

The present invention relates to an alkaline storage battery including a separator of polyolefin resin fibers interposed between positive and negative electrodes and a manufacturing method of the same. More particularly, the present invention is concerned with an improvement of the separator of polyolefin resin fibers.

In general, a separator of this kind is used to separate a positive electrode from a negative electrode for retaining an amount of electrolyte without causing any short-circuit between the electrodes and to permit ion passing thereacross. Accordingly, the fundamental characteristics required in the separator are summarized as follows:
(1) The property for separating positive and negative electrodes to eliminate a short-circuit caused by physical contact of the electrodes.
(2) An electric insulation property in the form of a menbrane.
(3) Higher permeability of ion and lower electric resistance
(4) Chemical stability to the electrolyte and electrochemical stablity..
(5) Higher absorption of electrolyte and higher retention of electrolyte.
(6) To be formed as thinner as possible for containing an active material in the electrodes at higher density.
(7) Mechanical strength required in an assembly process of the battery.

To effect the fundamental characteristics, a laminated separator comprised of a nonwoven fabric made of short fibers of polyolefin resin such as polypropylene and a nonwoven fabric made of long fibers has been proposed in Japanese Patent Laid-open Publication No 57-96459. In the laminated separator, a nonwoven fabric made of short fibers of 5 - 10 mm in fiber length is formed in such a manner that the short fibers of 50 g/m² in basis weight (fiber density) are arranged irregularly, and a nonwoven fabric made of long fibers of 20-30 mm in fiber length is formed in such a manner that the long fibers of 20 g/m² in basis weight (fiber density) are aligned in one direction. With such structure of the nonwoven fabrics, it is able to provide a separator superior in absorption of the electrolyte, retention of the electrolyte and mechanical strength.

In the case that the nonwoven fabric is made of only short fibers of equal to or less than 10 mm in fiber length for use in a separator of 40-70 g/m² in basis weight, the nonwoven fabric is superior in uniformity but inferior in stretch strength. If the separator was spirally wound to be used for a group of spiral electrodes, the nonwoven fabric would be broken. In the case that the nonwoven fabric is made of only long fibers of equal to or more than 25 mm in fiber length for use in the separator, the nonwoven fabric is superior in stretch strength but irregular in basis weight. This causes a short circuit in a portion smaller in basis weight or fiber density.

The separator made of only long fibers of more than 25 mm in fiber length is superior in porosity or gas permeability than the separator made of only short fibers of less than 10 mm in fiber length. On the other hand, the fiber surface area of the latter separator made of only the short fibers becomes larger than that of the former separator made of only the long fibers. This is useful to enhance the retention rate of electrolyte and to restrain an increase of internal pressure in the storage battery. From these facts, it seems that both the above advantages can be realized if the former separator of only the long fibers are used in combination with the latter separator of only the short fibers. However, in the laminated separator disclosed in Japanese Patent Laid-open Publication No. 57-96459, the non-woven fabric of short fibers is merely laminated on the nonwoven fabric of long fibers. With such an arrangement of the nonwoven fabrics, it is difficult to realize both the advantages discussed above.

It is, therefore, a primary object of the present invention to provide an alkaline storage battery wherein both the advantages discussed above can be realized to enhance the retention property of electrolyte and the gas permeability without causing any short-circuit therein.

According to the present invention, the object is accomplished by providing an alkaline storage battery including a separator of polyolefin resin fibers interposed between positive and negative electrodes thereof, wherein the separator of polyolefin resin fibers is composed of short micro-fibers and long micro-fibers uniformly entangled with each other. In the alkaline storage battery, it is desirable that the fiber length of the short micro-fibers is equal to or less than 10 mm, while the fiber length of the long micro-fibers is equal to or more than 25 mm.

With such structure of the separator as described above, the short micro-fibers are useful to increase the fiber surface area of the separator thereby to enhance the retention property of electrolyte and to restrain an increase of the internal pressure of the storage battery, and the long micro-fibers are useful to enhance the porosity of the separator thereby to enhance the gas permeability of the separator. This is also useful to prevent the occurrence of short-circuit in the alkaline storage battery and to enhance the utilization ratio of the active material.

According to an aspect of the present invention, there is provided a manufacturing method of an alkaline storage battery including a separator of polyolefin resin fibers interposed between positive and negative electrodes thereof, comprising the steps of producing a first ground fabric essentially comprised of split short fibers of polyolefin resin; producing a second ground fabric essentially comprised of split long fibers of polyolefin resin; laminating the first and second ground fabrics to form a laminated fabric of two layers; and subjecting the laminate fabric to a process for entangling fibers by high pressure water so that the split fibers are separated into short micro-fibers and long micro-fibers in their longitudinal directions and entangled with each other. In the manufacturing method, it is preferable that the split fibers are subjected to a hydrophilic treatment after subjected to the processing for entangling fibers by high pressure water.

As in the manufacturing process, the first ground fabric made of short micro-fibers and the second ground fabric made of long micro-fibers are overlapped with and stuck to each other and subjected to the process for entangling fibers by higher pressure water so that the short-micro fibers are separated in their longitudinal directions and uniformly entangled with the long micro-fibers, the porosity and gas permeability of the separator are enhanced, and the retention property of the separator is enhanced. This is effective to prevent the occurrence of short-circuit in the alkaline storage battery, to enhance the utilization ratio of the active material and to restrain an increase of the internal gas pressure of the battery.

In the case that the split fibers are subjected to a hydrophilic treatment after subjected to the process for entangling fibers by high pressure water, the hydrophilic property of the separator is enhanced thereby to enhance the retention property of electrolyte, the utilization ratio of the active material and the discharge capacity of the battery.

As it is very difficult to collect the short-micro fibers dispersed in the air by a wire netting during the manufacturing process, it is desirable that a paper making method is adapted to produce the first ground fabric of short micro-fibers by wet process. It is also difficult to uniformly disperse the long micro-fibers in the water. It is, therefore, desirable that the second ground fabric of long micro-fibers is produced by a paper making method in a dry condition.

In the manufacturing process of the separator, it is difficult to produce the first and second ground fabrics of equal to or less than 20 g/m² in basis weight in a stable manner. For this reason, it is desirable that the basis weight of the laminated fabric composed by the first and second ground fabrics is determined in an extent of 40 g/m² - 70 g/m^{2.}

Hereinafter, a preferred embodiment of the present invention adapted to an alkaline storage battery will be described in detail.

### 1. Manufacture of Separator:

### (1) Examples 1 - 4

Short fibers of equal to or less than 10mm (for example, 6 mm) in fiber length in the form of split fibers essentially comprised of polyolefin resin were dispersed in the water and formed in a paper in such a manner that the basis weight (fiber density) becomes 20 g/m² - 50 g/m². Thus, a first ground fabric was made of the short fibers by wet process. On the other hand, long fibers of equal to or more than 25 mm (for example, 50 mm) in fiber length in the form of split fibers essentially comprised of polyolefin resin were dispersed in the air and collected by wire netting. The long fibers were formed in a paper in such a manner that the basis weight becomes 20 g/m². Thus, a second ground fabric was made of the long fibers by dry process.

The first and second ground fabrics were simply overlapped and stack to each other to form a laminated fabric of two layers. Subsequently, the laminated fabric was subjected to a process for entangling fibers by high pressure water so that the split fibers are separated in the form of short micro-fibers and long micro-fibers aligned in their longitudinal directions. Thus, the short and long micro-fibers were used to prepare a mat body. Thereafter, the mat body was dried by a calender process and rolled under pressure in thickness of about 0.15 mm.

The rolled mat body of about 0.15 mm in thickness was introduced into a reaction container, and the reaction container was supplied with reaction gas after exhausted by vacuum. In this instance, the reaction gas was prepared by fluoride gas diluted with nitrogen gas. Thus, the rolled mat body was subjected to a hydrophilic treatment under presence of the reaction gas for one minute thereby to produce a separator of 40 g/m² - 70 g/m² in basis weight. In the case that the basis weight of the first ground fabric is 20 g/m² and that the basis weight of the second ground fabric is 20 g/m², the basis weight of the rolled mat becomes 40 g/m^{2.}.

In the production process of the separator, the hydrophilic treatment may be substituted for a corona-discharge treatment, a sulfonation treatment or a surfactant treatment. Since it is difficult to produce the mat body of equal to or less than 20 g/m² in basis weight by the paper making method by wet and dry processes, the lower limit value of basis weight was determined to be 20 g/m². As a result the lower limit value of the mat body became 40 g/m². In Examples 1 - 4 of the present invention, the first ground fabric of 20 g/m² in basis weight was used to prepare a separator a) of Example 1, the first ground fabric of 30 g/m² in basis weight was used to prepare a separator b) of Example 2, the first ground fabric of 40 g/m² in basis weight was used to prepare a separator c) of Example 3, and the first ground of fabric of 50 g/m² in basis weight was used to prepare a separator d) of Example 4.

### (2) Comparative examples 1 - 4

Short fibers of equal to or less than 10 mm (for example, 6 mm) in fiber length in the form of split fibers essentially comprised of polyolefin resin were dispersed in the water and made in a paper in such a manner that the basis weight becomes 40 g/m² - 70 g/m². Thus, a ground fabric was made of the short fibers.

The ground fabric was subjected to a process for entangling fibers by high pressure water so that the split fibers are separated in the form of short micro-fibers uniformly entangled with each other. The short micro-fibers were rolled under pressure in thickness of about 0.15 mm after dried by a calender process. Subsequently, the rolled short micro-fibers were subjected to a hydrophilic treatment in the same manner as in the Examples 1 - 4 to produce a separator of 40 g/m² -70 g/m² in basis weight. In Comparative examples 1 - 4, the ground fabric of 40 g/m² in basis weight was used to prepare a separator e) of Comparative example 1, the ground fabric of 50 g/m² in basis weight was used to prepare a separator f) of Comparative example 2, the ground fabric of 60 g/m² in basis weight was used to prepare a separator g) of Comparative example 3, and the ground fabric of 70 g/m² in basis weight was used to prepare a separator h) of Comparative example 4.

### (3) Comparative Examples 5 - 8

Continuous fibers of equal to or more than 25 mm (for example, 50 mm) in fiber length in the form of split fibers essentially comprised of polyolefin resin were dispersed in the air and collected by a wire netting. The long fibers were made in a paper in such a manner that the basis weight becomes 40 g/m² - 70 g/m². Thus, a ground fabric was made of the long fibers by dry process.

Subsequently, the ground fabric was subjected to a process for entangling fibers by high pressure water so that the split fibers are in the form of long micr-fibers uniformly entangled. The long micro-fibers were rolled under pressure in thickness of about 0.15 mm after dried by a calender process. The rolled long micro-fibers were subjected to a hydrophilic treatment to produce a separator of 40 g/m² - 70 g/m² in basis weight. The around fabric of 40 g/m² in basis weight was used to prepare a separator i) of Comparative example 5, the ground fabric of 50 g/m² in fiber density was used to prepare a separator j) of Comparative example 6, the ground fabric of 60 g/m² in basis weight was used to prepare a separator k) of Comparative example 7, and the ground fabric of 70 g/m² in basis weight was used to prepare a separator l) of Comparative example 8.

### (4) Comparative example 9

Short fibers of equal to or less than 10 mm (for example, 6 mm) in fiber length essentially comprised of polyolefin resin were dispersed in the water and made in a paper in such a manner that the basis weight becomes 20 g/m². Thus, a first ground fabric was made of the short fibers by wet process. In addition, long fibers of more than 25 mm (for example, 50 mm) in fiber length essentially comprised of polyolefin resin were dispersed in the air and collected by a wire netting. The collected long fibers were made in a paper in such a manner that the basis weight becomes 30 g/m². Thus, a second ground fabric was made of the long fibers by dry process.

The first and second ground fabrics were overlapped and pasted with each other to prepare a laminated fabric of two layers. The laminated fabric was rolled under pressure in thickness of about 0.15 mm after dried by a calender treatment. Subsequently, the laminated fabric was subjected to a hydrophilic treatment in the same manner described above to produce a separator m) of 50 g/m² in basis weight as Comparative example 9.

### 2. Manufacture of Nickel electrode

100 parts by weight of powder of a positive electrode active material essentially comprised of nickel hydroxide were mixed with 50 parts by weight of aqueous solution of 0.2 wt % hydroxy propyl cellulose to prepare a slurry. The slurry was impregnated into a foamed nickel positive electrode substrate of 95 % in porosity and rolled under pressure after dried to produce a nickel positive electrode. When the slurry was impregnated into the foamed nickel positive electrode substrate of 95 % in porosity, the amount of the positive electrode active material was determined to provide a storage battery of 1200 mAh in nominal capacity.

### 3. Manufacture of Negative electrode of hydrogen absorbing alloy

Powder of hydrogen absorbing alloy produced in a high frequency furnace was mixed with a binder such as polytetrafluoroethylene and an amount of water to prepare a paste of hydrogen absorbing alloy. Subsequently, the paste of hydrogen absorbing alloy was coated on opposite surfaces of a negative electrode substrate in the form of a punched sheet metal and pressed in predetermined thickness after dried to produce a negative electrode of hydrogen absorbing alloy of 2000 mAh in electrode capacity.

### 4. Manufacture of Nickel-hydrogen storage battery

### (1) Examples 1 - 4:

The nickel positive electrode and the negative electrode of hydrogen absorbing alloy were spirally wound with each of the separators a), b), c), d) to produce spiral electrodes. Subsequently, the spiral electrodes each were inserted into a cylindrical cell casing, and the cell casing was supplied with an amount of electrolyte such as 30 wt % potassium hydroxide and closed to produce nickel hydrogen storage batteries every 100 pieces. Hereinafter, the nickel hydrogen storage batteries provided with each of the separators a) - d) are referred to storage batteries A - D of Examples 1 - 4.

### (2) Comparative Examples 1 - 9

The nickel positive electrode and the negative electrode of hydrogen absorbing alloy were spirally wound with each of the separators e) - m) of Comparative examples 1 - 9 to produce spiral electrodes. These spiral electrodes each were inserted into a cylindrical cell casing, and the cell casing was supplied with an amount of electrolyte such as 30 wt % potassium hydroxide and closed to produce nickel hydrogen storage batteries every 100 pieces. Hereinafter, the nickel hydrogen storage batteries provided with each of the separators e) - m) are referred to storage batteries E - M of Comparative examples 1 - 9, respectively.

### 5. Measurement

### (1) Initial activation of Storage battery

The storage batteries A - M were charged by a charging current of 120 mA (0.1C) for sixteen (16) hours and rested for one hour. Thereafter, the storage batteries A - M were discharged at 240 mA (0.2C) until the final voltage becomes 1.0 V and rested for one hour. Such changing and discharging were repeated three times to activate the storage batteries A - M.

### (2) Measurement of Occurrence ratio of Short-ciruict

Each insulation resistance between the positive and negative electrodes in the respective storage batteries A - M was measured prior to the activation described above. In this instance, the occurrence of a short-circuit in the storage battery was determined by the fact that the measured resistance decreased less than 1.5 kΩ. A result of the measurement is shown in the following table 1.

### (3) Measurement of Utilization ratio of Active material

The activated storage batteries A - M were charged by a charging current of 120 mA (0.1C) for sixteen (16) hours and rested for one hour. Thereafter, the storage batteries A - M were discharged at 2400 mA (2C) until the final voltage becomes 1.0 V. Thus, a discharge capacity was measured on a basis of the discharging time, and a utilization ratio of active material at 2C discharge was measured on a basis of a ratio of discharge capacity to nominal capacity (1200 mAh) at 2C discharge. A result of the measurement is also shown in the following table 1.

### (4) Measurement of Internal pressure of Storage battery

The activated storage batteries A - M were charged by a charging current of 1200 mA (1C) for one hour. Immediately after lapse of one hour, each internal pressure of the storage batteries was measured. A result of the measurement is shown in the following table 1.

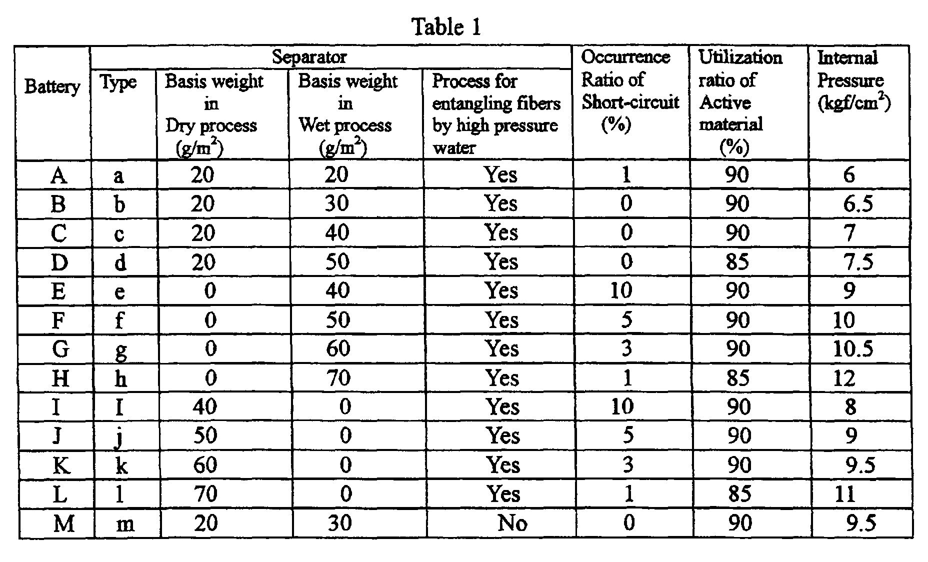

### 6. Test result

As is understood from the table 1, the occurrence of damage of the separator and the occurrence ratio of short-circuit in the storage battery A of Example 1 were noticeably decreased when compared with the storage batteries E and I of Comparative examples 1 and 5.

When the storage batteries E and I of Comparative examples 1 and 5 were broken up to investigate the cause of short-circuit therein, it has been found that a bur of the nickel positive electrode was in contact with the negative electrode of hydrogen absorbing alloy across a portion of the separator e) or I) where the basis weight (fiber density) became relatively small. In contrast with the storage batteries E and I, the separator a) of the storage battery A was composed of the first ground fabric of the wet type made of uniformly entangled short fibers and the second ground fabric of the dry type made of uniformly entangled long fibers. For this reason, it is assumed that irregularity of the basis weight in the separator a) is restrained to decrease the occurrence ratio of short-circuit.

In addition, it has been found that the internal pressure of the storage battery A was maintained at a lower value than that of the storage batteries E and I of Comparative examples 1 and 5. In the storage battery A, the fiber surface area of the first ground fabric of the dry type was increased by a large number of short fibers, and the retention amount of electrolyte was increased by long fibers of the second ground fabric. For this reason, it is assumed tat the gas permeability of the separator a) was enhanced to restrain an increase of the internal pressure of the storage battery A.

The foregoing facts have been found in the storage batteries B, C and D of Examples 2, 3 and 4, respectively in contrast with the storage batteries F and J, G and K, and H and L.

When compared with the storage battery M of Comparative example 9, it has been found that the internal pressure of the storage battery B of Example 2 was maintained at a lower value. In the manufacturing process of the storage battery B, the first and second ground fabrics of the separator b) were subjected to the process for entangling fiber by high pressure water to eliminate a difference between the two layers of the laminated fabric. For this reason, it is assumed that the distribution of electrolyte in the separator b) was uniformed to enhance the gas permeability of the separator and to decrease the internal pressure of the storage battery B. Contrarily, in the manufacturing process of the storage battery M of Comparative example 9, the separator m) was produced without subjected to the process for entangling fibers by high pressure water as in Example 2. It is, therefore, assumed that irregularity in gas absorbing action at the electrodes was caused by a difference between the two layers of the laminated fabric, resulting in an increase of the internal pressure of the storage battery M.

As is understood from the detailed description of the above embodiment, the separator according to the present invention is formed by short micro-fibers and long micro-fibers uniformly entangled with each other during the manufacturing process. With such structure of the separator, the short fibers are useful to increase the fiber surface area of the separator thereby to enhance the retention property of electrolyte and to restrain an increase of the internal pressure of the storage battery, and the long fibers are useful to enhance the porosity of the separator thereby to enhance the gas permeability of the separator This is also useful to prevent the occurrence of short-circuit in the alkaline storage battery and to enhance the utilization ratio of the active material.

As in the manufacturing process of the present invention, the first ground fabric made of short micro-fibers and the second ground fabric made of long micro-fibers are overlapped with and stuck to each other and subjected to the process for entangling fibers by high pressure water so that the short micro-fibers are separated in their longitudinal directions and uniformly entangled with the long micro-fibers, the distribution of electrolyte in the separator is uniformed to enhance the utilization ratio of the active material and to increase the discharge capacity of the alkaline storage battery.

Although in the above embodiment the present invention was adapted to a nickel hydrogen absorbing storage battery, the present invention may be adapted to another alkaline storage battery such as a nickel-cadmium storage battery to obtain the same effects as in the above embodiment. In the manufacturing process of the separator according to the present invention, the split short fibers used in the first ground fabric may be substituted for other short fibers such as thermal bonding short fibers. Similarly, the split long fibers used in the second ground fabric may be substituted for other long fibers such as thermal bonding long fibers.

In the manufacturing process of the separator according to the present invention, it is preferable that the fiber length of short fibers used in the first ground fabric is determined in an extent of 3 mm - 10 mm, and it is also preferable that the fiber length of long fibers used in the second ground fabric is determined in an extent of 25 mm - 70 mm.

## Claims

1. An alkaline storage battery including a separator of polyolefin resin fibers interposed between positive and negative electrodes thereof,
wherein said separator of polyolefin resin fibers is composed of short micro-fibers and long micro-fibers uniformly entangled with each other.

2. An alkaline storage battery as claimed in Claim 1, wherein
the fiber length of said short micro-fibers is equal to or less than 10 mm, while the fiber length of said long micro-fibers is equal to or more than 25 mm.

3. An alkaline storage battery as claimed in Claim 1,
wherein said short micro-fibers are in the form of split short fibers separated in a longitudinal direction and wherein said long micro-fibers are in the form of split long fibers separated in a longitudinal direction.

4. An alkaline storage battery as claimed in Claim 1, wherein
the basis weight of said separator is in an extent of 40 g/m² to 70 g/m^{2.}

5. A manufacturing method of an alkaline storage battery
including a separator of polyolefin resin fibers interposed between positive and negative electrodes thereof, comprising the steps of:
producing a first ground fabric essentially comprised of split short fibers of polyolefin resin;
producing a second ground fabric essentially comprised of split continuous fibers of polyolefin resin;
laminating said first and second ground fabrics to form a laminated fabric of two layers; and
subjecting said laminate fabric to a process for entangling fibers by high pressure water so that the split fibers are separated in the form of short micro-fibers and long micro-fibers aligned in their longitudinal directions and entangled with each other.

6. The manufacturing method of an alkaline storage battery as claimed in Claim 5, wherein said split fibers are subjected to a hydrophilic treatment after subjected to the process for entangling fibers by high pressure water.

7. The manufacturing method of an alkaline storage battery as claimed in Claim 5, wherein said first ground fabric is produced by wet process, while said second ground fabric is produced by dry process.

8. The manufacturing method of an alkaline storage battery as
claimed in Claim 5, wherein the fiber length of said short micro-fibers is equal to or less than 10 mm, while the length of said long micro-fibers is equal to or more than 25 mm.

9. The manufacturing method of an alkaline storage battery as
claimed in Claim 5, wherein the basis weight of said laminated fabric is in an extent of 40 g/m² - 70 g/m².
